# EUROPEAN PATENT APPLICATION

(11) **EP 1 678 999 A2**
(43) Date of publication of application: **12.07.2006**
(21) Application number: 05384801.6
(22) Date of filing: 30.09.2005
(51) Int. Cl.: A01G 13/02

(54) **Sucker control shield**

(30) Priority: 28.10.2004 ES 200402531 U
(71) Applicant: Arenal - Cano, Antonio, 31290 Eraul, Navarra (ES)
(72) Inventor: Arenal - Cano, Antonio, 31290 Eraul, Navarra (ES)

(57) **Abstract**

**Summary of the invention**

The sucker control shield is a piece of flexible, opaque plastic material made up of two elements sealed together. The resulting piece after joining both parts (Figure 3) is placed around the bottom and lower section of the tree. A radial opening across one side (Figure 1 C) enables us to place the piece in its final position all around the tree (Figure 4). After that, one edge of the opening overlaps the other (Figure 3C) and nails are used to close the radial opening and fasten the upper section to the bottom of the trunk. In order for the device to stay firmly attached to the soil, generous amounts of earth are shovelled all around the outer perimeter (Figure 4 a), which can be extended to the whole piece for aesthetic reasons. In this way the area around the tree liable to grow yearly suckers is protected against any kind of unwelcome growing.

## Description

### Field of application

Agriculture

### Previous technology

None

### Summary of the invention

The *sucker shield* consists of an opaque plastic sheet which is placed around the lower part of the tree trunk covering a small area surrounding the bottom of the tree in order to prevent the annual growing of shoots from the root of fruit-trees.

### Description of the drawings

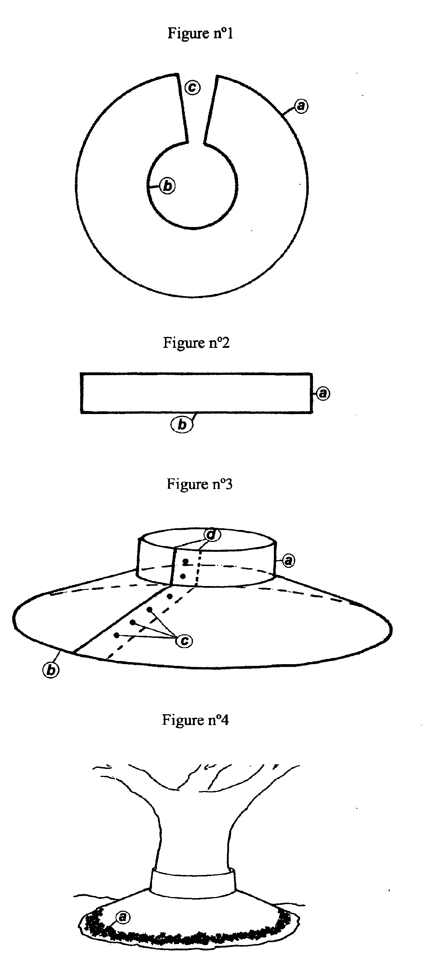

The first piece (Figure 1) is in the form of a circular ring. Its measurements vary according to the size of the tree. It is open across one side (Figure 1 c) so that the trunk of the tree can fit into the inner circle of the ring.

The second component is a rectangular piece measuring 15 cm high (Figure 2 a). The base (Figure 2 b) is the same length as the inner circumference of the first component (Figure 1 b) to which it is attached in an upright position. Its task is to enclose the trunk of the tree (Figure 3 a).

### HOW IT IS INSTALLED

It consists of an opaque plastic sheet made up of two separate pieces joined together which is placed around the lower part of the tree.

The radial opening allows the sheet to be placed around the tree so that the tree trunk is positioned into the inner circle, then the flap of the sheet is stretched all around the tree. The two edges of the opening are brought together one on top of the other (Figure 3 d) and fastened with nails all along and up the rectangular piece which surrounds the trunk of the tree (Figure 3 c) so that the radial opening is completely closed and the *sucker control shield* is attached to the tree. The installation ends by generously turning over the earth around and piling it over the outer perimeter to secure the sheet firmly to the ground.

## Claims

1. A method for preventing the annual growing of shoots from the root of fruit trees, chiefly olive trees by means of the installation of a plastic sheet in the shape of a ring around the bottom of the tree. The plastic sheet consists of a circular ring (Figure 1) and a rectangular strip in the same material attached to the inner circumference of the ring at right angles so that it stands upright (Figure 3 a). The resulting piece is cut right across one side (Figure 1 c). Wire nails of 25 mm long by 2 mm thick and 15 mm head (Figure 3 c) are used to close the radial opening and fasten the sheet to the trunk of the tree.
